(19)

Europäisches
Patentamt
European
Patent Office
Office européen
des brevets

(11) **EP 2 980 141 A1**

(12) **EUROPEAN PATENT APPLICATION**
published in accordance with Art. 153(4) EPC

(43) Date of publication:
**03.02.2016 Bulletin 2016/05**

(21) Application number: **14774933.7**

(22) Date of filing: **20.03.2014**

(51) Int Cl.:
***C08J 9/00*** ^(2006.01)

(86) International application number:
**PCT/JP2014/057754**

(87) International publication number:
**WO 2014/156952 (02.10.2014 Gazette 2014/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **26.03.2013   JP 2013063409**

(71) Applicant: **Toray Industries, Inc.
Tokyo 103-8666 (JP)**

(72) Inventors:
• **AOYAMA, Shigeru
  Otsu-shi
  Shiga 520-8558 (JP)**
• **YAMAMURA, Gouhei
  Otsu-shi
  Shiga 520-8558 (JP)**

• **MOTOSHIROMIZU, Takahiro
  Mishima-shi
  Shizuoka 411-8652 (JP)**
• **HIROTA, Masayuki
  Otsu-shi
  Shiga 520-8558 (JP)**
• **HAMASAKI, Risa
  Otsu-shi
  Shiga 520-8558 (JP)**
• **SUEOKA, Masanori
  Otsu-shi
  Shiga 520-8558 (JP)**

(74) Representative: **Prüfer & Partner mbB
European Patent Attorneys
Sohnckestraße 12
81479 München (DE)**

(54) **FILM**

(57)    The invention aims to provide film that is high in water resistance and degradability and formed mainly of biodegradable resin. The invention provides film comprising a thermoplastic resin (A), and a filler (B) in an amount of 1 to 70 mass% of the total mass, i.e. 100 mass%, of the film, and having a porosity of 80% or less, a tear strength of 200 mN or less in a direction, and a tensile strength of less than 15 MPa in a direction.

EP 2 980 141 A1

**Description**

Technical Field

The present invention relates to film that is high in water resistance and degradability and formed mainly of biodegradable resin.

Background Art

With the heightening of environment consciousness in recent years, attention is focused on soil contamination problems caused by waste plastic products, and attention is also focused on global warming problems attributable to an increase in the carbon dioxide concentration caused by combustion of waste. Research and development studies have been performed actively on various biodegradable resins and biomass (plant-derived material) based resins, whose incineration will not increase the carbon dioxide load on the atmosphere, as means of solving the former and the latter problems, respectively. Expectations are growing for resins, such as polylactic acid, that are able to meet both of the above purposes and relatively advantageous in terms of cost as well. Polylactic acid is not sufficiently high in flexibility and impact resistance when used as material for soft films, for which polyolefins such as polyethylene have been used widely. Polylactic acid is not high in decomposition rate either, necessitating the volume reduction of films after use for intended applications. Various efforts have been made to provide films that have improved characteristics and serve for practical uses.

Patent document 1, for example, discloses a porous sheet that is produced by stretching at least uniaxially a sheet containing a polylactic acid resin, a filler, and a common polyester based plasticizer. Patent document 2 discloses a porous film that is produced by stretching a sheet containing a polylactic acid resin, a thermoplastic resin other than polylactic acid resin, and a filler.

Prior Art Documents

Patent Documents

Patent document 1: Japanese Unexamined Patent Publication (Kokai) No. 2007-112867
Patent document 2: International Publication WO 2012/023465

Summary of the Invention

Problems to be Solved by the Invention

Films produced by the techniques described in Patent documents 1 and 2 given above fail to have sufficiently high degradability although fairly high in water resistance.

Thus, although studies have been made about highly water resistant biodegradable films, none of them have succeeded in developing films that are also high in degradability.

Accordingly, in view of these conventional techniques, the present invention aims to provide a film that is high in both water resistance and degradability.

Means of Solving the Problems

The present invention provides a film
comprising a thermoplastic resin (A), and

a filler (B) in the amount of 1 to 70 mass% relative to 100 mass% of the total film mass, and

having a porosity of 80% or less,

a tear strength of 200 mN or less in a direction, and
a tensile strength of less than 15 MPa in a direction,

or comprising a thermoplastic resin (A),

and a hydrophilic resin (A2) in the amount of 1 to 40 mass% relative to 100 mass% of the total film mass, and

having a porosity of 80% or less,

a tear strength of 200 mN or less in a direction, and
a tensile strength of less than 15 MPa in a direction.

Advantageous Effect of the Invention

The present invention provides a film that is high in water resistance and degradability. The film according to the invention can be used suitably for uses that mainly require water resistance and degradability. Specifically, they include agricultural materials such as mulching film, forestry materials such as fumigating sheets, hygienic materials such as napkin, paper diaper, and liner, and various packaging materials such as shopping bag, garbage bag, food bag, and other industrial packages.

Description of Preferred Embodiments

As a result of intensive studies on the above problems in developing a film that is high in water resistance and degradability, the inventors became the first to succeed in solving the problems after identifying a suitable composition of a thermoplastic resin, particularly a biodegradable resin, and a filler to produce a film having a porosity, tear strength, and tensile strength in a specific range. Specifically, the first embodiment of the present invention (hereinafter referred to film 1 according to the present invention) provides a film containing a thermoplastic resin (A), and a filler (B) in an amount of 1 to 70 mass% of the total mass of the film, which accounts for 100 mass%, and having a porosity of 80% or less, a tear strength of 200 mN or less in a direction, and a tensile strength of less than 15 MPa in a direction. The second embodiment of the present invention (hereinafter referred to film 2 according to the present invention) provides a film containing a thermoplastic resin (A), and a hydrophilic resin (A2) in an amount of 1 to 40 mass% of the total mass of the film, which accounts for 100 mass%, and having a porosity of 80% or less, a tear strength of 200 mN or less in a direction, and a tensile strength of less than 15 MPa in a direction.

The decomposition of film 1 and film 2 according to the present invention proceeds in step 1 and step 2 described below. Specifically, (after use for intended purposes) the film is collected and stored in a garbage bag or the like where it decomposes into small pieces (step 1). This reduces the total volume. If the thermoplastic resin (A), the major constituent of the film according to the present invention, contains a biodegradable resin (A1), the film is decomposed by the metabolism of microorganisms in compost, soil, or the like and finally degraded to water and carbon (step 2).

It has been known that the molecular structure of the biodegradable resin is a major decisive factor in the degradability in step 2. For film 1 and film 2 according to the present invention, it was found that the tear strength and tensile strength in specific directions of the film are important factors in step 1 described above and that a high degradability can be achieved by controlling these properties in specific ranges.

As described in detail later, a degradable film as referred to for the present invention decomposes easily after being used for an intended purpose and increases in biodegradability as it decomposes. Mechanical characteristics such as strength and elongation percentage, and the degree of reduction in molecular weight of the resin that constitutes the film are generally used as indicators of degradability. Furthermore, it is preferable for the film to undergo collapse of shape when exposed to water or the like (hereinafter referred to as water disintegrability).

The film according to the present invention is described in detail below.

(Film 1)

Film 1 according to the present invention is a film containing a thermoplastic resin (A), and a filler (B) in an amount of 1 to 70 mass% of the total mass of the film, which accounts for 100 mass%, and having a porosity of 80% or less, a tear strength of 200 mN or less in a direction, and a tensile strength of less than 15 MPa in a direction, and details of the film are as follows.

(Thermoplastic resin (A))

There are no specific limitations on the thermoplastic resin (A) contained in film 1 according to the present invention, but preferable examples include: (i) aromatic polyester based resins such as polyethylene terephthalate, polyethylene-2,6-naphthalate, polypropylene terephthalate, and polybutylene terephthalate, (ii) biodegradable resins (described in detail later) such as aliphatic polyester resin, aliphatic aromatic polyester, polysaccharides, and starch-containing polymers, (iii) acrylic resins such as poly(meth)acrylate, (iv) polyolefin resins such as polyethylene, polypropylene, polymethylpentene, polyisoprene, epoxy modified polyolefin, acid modified polyolefin, and alicyclic polyolefin resin, (v) other resins of polyamide based resin, polycarbonate, polystyrene, polyether, polyester amide, polyether ester, polyvinyl chloride, polyvinyl alcohol, polyacetal, polyphenylene sulfide, polyether ether ketone, polyurethane, polysulfone, polyphenylene oxide, polyimide, polyetherimide, polyester elastomer, polyamide elastomer, and polyolefin elastomer, as well as copolymers and mixtures thereof.

(Biodegradable resin (A1))

The thermoplastic resin (A) contained in film 1 according to the present invention preferably contains a biodegradable resin (A1). There are no specific limitations on the biodegradable resin (A1) as long as it is a resin having biodegradability.

Such biodegradability as referred to for the present invention means that the biodegradable resin (A1) existing in the film undergo biodegradation to a degree of 60% or more within one year when tested according to any of JIS K6950: 2000 (ISO14851), JIS K6951: 2000 (ISO14852), JIS K6953-1: 2011 (ISO14855), JIS K6953-2: 2010 (ISO14855), JIS K6955: 2006 (ISO17556).

Useful examples of biodegradable resin (A1) for film 1 according to the present invention include aliphatic polyester, aliphatic aromatic polyester, polysaccharides, starch-containing polymer, and polyvinyl alcohol.

Specific examples of the aliphatic polyester include polylactic acid based resin (a1, described in detail later), polyglycolic acid, poly(3-hydroxybutyrate), poly(3-hydroxybutyrate 3-hydroxyhexanoate), poly(3-hydroxybutyrate 3-hydroxyvalerate), polycaprolactone, polybutylene succinate, and poly(butylene succinate adipate).

Specific examples of the aliphatic aromatic polyester include poly(ethylene succinate terephthalate), poly(butylene succinate terephthalate), and poly(butylene adipate terephthalate).

Specific examples of the polysaccharides include cellulose based resin such as cellulose acetate, and glucosamine based resins such as chitosan.

Specific examples of the starch-containing polymers include thermoplastic starch and Mater-Bi (registered trademark), a biodegradable resin product manufactured by Novamont.

Of these, the biodegradable resin (A1) is preferably a polylactic acid based resin (a1) from the viewpoint of biomass properties, cost, and processability. Details of the polylactic acid based resin (a1) are described below.

(Polylactic acid based resin (a1))

The polylactic acid based resin (a1) is defined as a polymer containing, as main component, an L-lactic acid and/or a D-lactic acid. Here, the "main component" accounts for the largest proportion by mass of the lactic acid units in the 100 mass% quantity of the polymer. The lactic acid units preferably account for a mass proportion of 70 mass% to 100 mass% of the 100 mass% quantity of the polymer.

A poly-L-lactic acid as referred to for film 1 according to the present invention is a polylactic acid based polymer in which the poly-L-lactic acid accounts for more than 50 mol% and 100 mol% or less of the total lactic acid units, which account for 100 mol%, in the polymer. A poly-D-lactic acid as referred to for the present invention, on the other hand, is a polylactic acid based polymer in which the poly-D-lactic acid accounts for more than 50 mol% and 100 mol% or less of the total lactic acid units, which account for 100 mol%, in the polymer.

A poly-L-lactic acid changes in resin crystallinity depending on the content of D-lactic acid units. Specifically, a poly-L-lactic acid decreases in crystallinity and increases in amorphousness with an increasing content of D-lactic acid units in the poly-L-lactic acid while a poly-L-lactic acid increases in crystallinity with a decreasing content of D-lactic acid units in the poly-L-lactic acid. Similarly, a poly-D-lactic acid changes in resin crystallinity depending on the content of L-lactic acid units. Specifically, a poly-D-lactic acid decreases in crystallinity and increases in amorphousness with an increasing content of L-lactic acid units in the poly-D-lactic acid while a poly-D-lactic acid increases in crystallinity with a decreasing content of L-lactic acid units in the poly-D-lactic acid.

The L-lactic acid units in a poly-L-lactic acid used for film 1 according to the present invention or the D-lactic acid units in a poly-D-lactic acid used for the present invention preferably account for 80 to 100 mol%, more preferably 85 to 100 mol%, of the total lactic acid units, which account for 100 mol%, from the viewpoint of providing a composition with required mechanical strength.

As described later, the polylactic acid based resin (a1) to be used as biodegradable resin (A1) is preferably a mixture of a crystalline polylactic acid based resin (a11) and an amorphous polylactic acid based resin (a12).

The crystalline polylactic acid based resin (a11) as referred to for film 1 according to the present invention is a polylactic acid based resin that shows a crystal melting peak attributed to a polylactic acid component when subjecting the polylactic acid resin to measurement by differential scanning calorimetry (DSC) while heating from 25°C to 250°C at a heating rate of 20 °C/min after leaving it to stand at an elevated temperature of 100°C for 24 hours.

The amorphous polylactic acid based resin (a12) as referred to for film 1 according to the present invention, on the other hand, is a polylactic acid based resin that does not show a distinct melting point when subjected to the same measurement.

The polylactic acid based resin (a1) used for film 1 according to the present invention may be a copolymer containing monomer units other than lactic acid. Such other monomers include glycol compounds such as ethylene glycol, propylene glycol, butanediol, heptanediol, hexanediol, octanediol, nonanediol, decanediol, 1,4-cyclohexane dimetanol, neopentyl glycol, glycerin, pentaerythritol, bisphenol A, polyethylene glycol, polypropylene glycol, and polytetramethylene glycol; dicarboxylic acids such as oxalic acid, adipic acid, sebacic acid, azelaic acid, dodecanedioic acid, malonic acid, glutaric acid, cyclohexanedicarboxylic acid, terephthalic acid, isophthalic acid, phthalic acid, naphthalene dicarboxylic acid, bis(p-carboxyphenyl) methane, anthracene dicarboxylic acid, 4,4'-diphenyl ether dicarboxylic acid, 5-sodium sulfoisophthalic acid, and 5-tetrabutyl phosphonium isophthalic acid; hydroxycarboxylic acids such as glycolic acid, hydroxypropionic acid, hydroxybutyric acid, hydroxyvaleric acid, hydroxycaproic acid, and hydroxybenzoic acid; and lactones such as caprolactone, valerolactone, propiolactone, undecalactone, and 1,5-oxepane-2-one. Of copolymers, any one that does not fall under the category of the thermoplastic resin (a2) described later is referred to as polylactic acid based resin (a1).

Such other monomer units preferably account for 0 to 30 mol%, more preferably 0 to 10 mol%, of the total quantity of monomer units, which accounts for 100 mol%, in the polylactic acid based resin polymer (a1). Of the monomer units given above, biodegradable ones should preferably be used, depending on uses.

With respect to the polylactic acid based resin (a1) used for film 1 according to the present invention, it is also preferable that a small amount of poly-D-lactic acid be contained when poly-L-lactic acid is the major component or that a small amount of poly-L-lactic acid be contained when poly-D-lactic acid is the major component. This is because stereocomplex crystals formed thereof have a higher melting point than that of common polylactic acid crystals ($\alpha$-crystals), and form a film with improved heat resistance. It is noted that the major component referred to here is the one that accounts for more than 50 mass% of the total quantity of the polylactic acid based resin (a1) in the film, which accounts for 100 mass%.

To meet practical mechanical characteristics as well as water resistance and degradability, the polylactic acid based resin (a1) used for film 1 according to the present invention preferably has a mass average molecular weight of 50,000 to 240,000, more preferably 60,000 to 200,000, and still more preferably 70,000 to 160,000. The mass average molecular weight as referred to herein is the molecular weight measured by gel permeation chromatography (GPC) using chloroform as solvent and converted in terms of polymethyl methacrylate.

The polylactic acid based resin (a1) can be produced by a generally known method such as direct polymerization from lactic acid and ring opening polymerization via lactide.

There are no specific limitations on the content of the biodegradable resin (A1) in the total quantity, 100 mass%, of film 1 according to the present invention, but it is preferably 15 to 60 mass%, more preferably 20 to 55 mass%, and still more preferably 25 to 50 mass%.

(Mixing of crystalline polylactic acid based resin (a11) and amorphous polylactic acid based resin (a12))

For film 1 according to the present invention, the polylactic acid based resin (a1) used as biodegradable resin (A1) is preferably a mixture of a crystalline polylactic acid based resin (a11) and an amorphous polylactic acid based resin (a12). This is because such a mixture can serve to maintain the advantages of both, crystalline and amorphous, polylactic acid based resins (a1).

Specifically, the existence of a crystalline polylactic acid based resin (a11) as the polylactic acid based resin (a1), which is a biodegradable resin (A1), is preferable because the resulting film will have high heat resistance and high blocking resistance. If a block copolymer plasticizer as described later is used, the crystalline polylactic acid based resin (a11) can have large effect on improvement in bleed-out resistance of the block copolymer plasticizer as a result of forming eutectic crystals with the polylactic acid segment of the block copolymer plasticizer.

On the other hand, the existence of an amorphous polylactic acid based resin (a12) as the polylactic acid based resin (a1), which is a biodegradable resin (A1), is preferable to allow the resulting film to have high flexibility and, if a plasticizer is used, allow the plasticizer to have improved bleed-out resistance. This is because the amorphous polylactic acid based resin (a12) has amorphous parts where the plasticizer can be dispersed.

In the crystalline polylactic acid based resin (a11) used to form film 1 according to the present invention, the L-lactic acid units in a poly-L-lactic acid or the D-lactic acid units in a poly-D-lactic acid preferably accounts for 96 to 100 mol%, more preferably 98 to 100 mol%, of the total quantity of lactic acid units, which accounts for 100mol%, from the viewpoint of improving heat resistance and blocking resistance.

Assuming that the total quantity of the polylactic acid based resin (a1) in film 1 according to the present invention accounts for 100 mass% (or, assuming that the total quantity of the crystalline polylactic acid based resin (a11) and the amorphous polylactic acid based resin (a12) accounts for 100 mass%), it is preferable that the crystalline polylactic acid based resin (a11) accounts for 5 to 60 mass%, more preferably 10 to 50 mass%, and still more preferably 20 to 40 mass%.

(Thermoplastic resin (a2) other than polylactic acid based resin (a1))

In the case where the thermoplastic resin (A) contains polylactic acid based resin, it is preferable for film 1 according to the present invention to contain a thermoplastic resin (a2) other than the polylactic acid based resin (a1) from the viewpoint of improvement in moisture permeability and degradability. Here, of the components constituting the thermoplastic resin A, those other than the polylactic acid based resin (a1) are referred to collectively as thermoplastic resin (a2). Examples of the thermoplastic resin (a2) include those resins (other than polylactic acid based resins) cited as biodegradable resin (A1), as well as polyacetal, polyethylene, polypropylene, polyamide, poly(meth)acrylate, polyphenylene sulfide, polyether ether ketone, polyester, polyurethane, polyisoprene, polysulfone, polyphenylene oxide, polyimide, polyetherimide, epoxy modified polyolefin, acid-modified polyolefin, olefin-acrylic copolymers, epoxy modified olefin-acrylic copolymers, polyester elastomers, polyamide elastomers, polyolefin elastomers, and resin based plasticizers (a21).

Examples of the resin based plasticizers (a21) that are preferred as the thermoplastic resin (a2) other than the polylactic acid based resin (a1) include polyester based plasticizers, such as polypropylene glycol sebaciate, polyalkylene ether based plasticizers, ether ester based plasticizers, and acrylate based plasticizers. Of these plasticizers, the resin based plasticizers (a21) should preferably has biodegradability from the viewpoint of maintaining biodegradability of the entire film. From the viewpoint of the bleed-out resistance of the plasticizer and the heat resistance and blocking resistance of the film, the resin based plasticizer (a21) is preferably in a solid state at room temperature ($20°C \pm 15°C$), or more specifically, preferably has a melting point above 35°C, like, for instance, polyethylene glycol with a number average molecular weight of 1,000 or more. The resin based plasticizer (a21) preferably has a melting point of 150°C or less so that it melts in the same temperature range as that of the polylactic acid based resin (a1) used as biodegradable resin (A1).

From the same point of view, it is preferable that the resin based plasticizer (a21) used as the thermoplastic resin (a2) other than the polylactic acid based resin (a1) be at least one resin selected from the group consisting of block copolymers having polyether segment and polylactic acid segment and block copolymers having polyester segment and polylactic acid segment. Here, the plasticizer component of the thermoplastic resin (a2) is the polyether based segment and the polyester based segment. Here, the polyester based segment refers a segment that is formed of polyester that is not polylactic acid. These block copolymers are as described below (hereinafter, block copolymers having polyether based segment and polylactic acid segment and block copolymers having polyester based segment and polylactic acid segment are generically called block copolymer plasticizers).

The mass content of the polylactic acid based segment in a block copolymer plasticizer is preferably 50 mass% or less of the total quantity, 100 mass%, of the block copolymer plasticizer because it can work effectively in a small amount to develop an intended flexibility, and it is preferably 5 mass% or more from the viewpoint of depressing the bleed-out. It is preferable that in a molecule of a block copolymer plasticizer, the polylactic acid based segment have a number average molecular weight of 1,200 to 10,000. If it is 1,200 or more for the polylactic acid based segment in a block copolymer plasticizer, adequate affinity will develop between the block copolymer plasticizer and polylactic acid based resin (a1) used as biodegradable resin (A1), and part of the polylactic acid based segment will be caught in the crystals formed from the polylactic acid based resin (a1) used as biodegradable resin (A1) and form so-called eutectics, which will act to fasten the block copolymer plasticizer to the polylactic acid based resin (a1) used as biodegradable resin (A1) and thereby serve very effectively to suppress the bleed-out of the block copolymer plasticizer. Consequently, the resulting film will have a high blocking resistance.

Such a block copolymer plasticizer, furthermore, contributes largely to improvement of the moisture permeability as described later as compared with plasticizers that are in a liquid state at room temperature and those unable to form eutectics even if in a solid state at room temperature. This is because the resulting eutectic crystals serve to improve the pore formation efficiency due to stretching as described later. The number average molecular weight of the polylactic acid based segment in the block copolymer plasticizer is more preferably 1,500 to 6,000, and still more preferably 2,000 to 5,000. To depress the bleed-out, in particular, it is preferable that L-lactic acid accounts for 95 to 100 mass% or D-lactic acid accounts for 95 to 100 mass% of the total quantity, or 100 mass%, of the polylactic acid segment in a block copolymer plasticizer.

It is preferable that in 100 mass% of the block copolymer plasticizer, the mass content of the polylactic acid segment be 5 mass% to 45 mass%, and the mass content of the polyether based segment or polyester based segment be 55 mass% to 95 mass%.

Here, the plasticizing component in the block copolymer plasticizer is preferably polyethylene glycol because it is high in the affinity with polylactic acid based resin to ensure a high modification efficiency, and particularly because the addition of a small amount of a plasticizer can serve to develop an intended flexibility.

If the block copolymer plasticizer used has polyester based segment, the polyester based segment contained is preferably a polyester formed from polyglycolic acid, poly(3-hydroxybutyrate), poly(3-hydroxybutyrate 3-hydroxyhexanoate), poly(3-hydroxybutyrate 3-hydroxyvalerate), polycaprolactone, or an aliphatic diol such as ethylene glycol, propanediol, and butanediol, in combination of an aliphatic dicarboxylic acid such as succinic acid, sebacic acid, and adipic acid.

It is preferable, furthermore, that the polyether based segment and the polyester based segment contained in a molecule of a block copolymer plasticizer have a number average molecular weight of 7,000 to 20,000. If they are in the above range, the resulting composition to form a film will have an adequate moisture permeability and water resistance, and at the same time, the composition also containing a biodegradable resin (A1) will be able to have a moderate level of melt viscosity, thereby serving to maintain stable film production processability during film production by, for instance, inflation molding.

There are no specific limitations on the order of connection between the segments in the block copolymer, that is, the polyether based segments and/or polyester based segments and the polylactic acid based segment, but for ensuring more effective depression of bleed-out, it is preferable that a polylactic acid based segment exist at least at one end of the molecule of the block copolymer plasticizer. It is most preferable that polylactic acid segments are located at both ends of the molecule of the block copolymer plasticizer.

Described in detail below is a block copolymer plasticizer that contains a polyethylene glycol (hereinafter, polyethylene glycol is abbreviate as PEG) having hydroxyl terminal groups at both ends as the polyether segment.

For commercial PEG products, the number average molecular weight of a PEG with hydroxyl terminal groups at both ends is commonly calculated from the hydroxyl value determined by an appropriate technique such as the neutralization method (hereinafter, the number average molecular weight of a PEG is denoted as $M_{PEG}$). A substantially PLA-PEG-PLA type block copolymer (here, PLA denotes polylactic acid) can be produced by preparing a mixture by adding $w_L$ parts by mass of a lactide to $w_E$ parts by mass of a PEG having hydroxyl terminal groups at both ends and carrying out polymerization thoroughly through ring opening reaction of lactide molecules and their addition to the hydroxyl terminal groups at both ends of the PEG molecules. This reaction is carried out in the presence of a catalyst such as tin octylate as required. The number average molecular weight of polylactic acid segment in this block copolymer plasticizer can be calculated as $(1/2) \times (w_L/w_E) \times M_{PEG}$. The mass content of the polylactic acid segment component in the entire block copolymer plasticizer is determined substantially as $100 \times w_L / (w_L + w_E)$ (%). The mass content of the plasticizer components excluding the polylactic acid segment component in the entire block copolymer plasticizer is determined substantially as $100 \times w_E / (w_L + w_E)$ (%).

If the number average molecular weight of a segment in the block copolymer plasticizer is to be evaluated after separating the block copolymer plasticizer from the resulting film, the following procedure may be carried out. To separate the block copolymer plasticizer from a film, the film is dissolved uniformly in a good solvent such as, for instance, chloroform, and the solution is added dropwise to an appropriate poor solvent such as water and water/methanol mixture solution. The sediment is removed by, for instance, filtration, and the solvent in the filtrate is evaporated to separate the block copolymer plasticizer. The block copolymer plasticizer thus separated is subjected to gel permeation chromatography (GPC) to determine the number average molecular weight (hereinafter abbreviated as M). Then, $^1$H-NMR measurement is carried out to identify the polylactic acid segment, polyether based segment and/or polyester based segment. The molecular weight of the polylactic acid segment in a block copolymer is calculated as: $M \times \{1 / (\text{number of polylactic acid segment units in one molecule})\} \times (I_{PLA} \times 72) / [(I_{PE} \times UM_{PE} / N_{PE}) + (I_{PLA} \times 72)]$. Here, $I_{PLA}$ denotes the integrated intensity of signals from $^1$H-NMR measurement attributed to the hydrogen of the methine group in the PLA backbone chain, while $I_{PE}$ denotes the integrated intensity of signals from $^1$H-NMR measurement attributed to the polyether based segment and/or polyester based segment. Furthermore, $UM_{PE}$ represents the molecular weight of the monomer units of the polyether based segment and/or polyester based segment, while $N_{PE}$ represents the number of chemically equivalent protons in the polyether based segment and/or polyester based segment that give $^1$H-NMR signals corresponding to $I_{PE}$. The number average molecular weight of the polyether based segment and/or polyester based segment can be calculated as: M - (number average molecular weight of polylactic acid segment) × (number of polylactic acid segment units in one molecule).

The content of the thermoplastic resin (a2) other than the polylactic acid based resin (a1) relative to the total quantity, i.e. 100 mass%, of the components of film 1 according to the present invention is preferably 10 to 55 mass%, more preferably 15 to 50 mass%, and still more preferably 20 to 45 mass%, from the viewpoint of moisture permeability, water resistance, and degradability.

Here, the content of the polylactic acid based resin (a1) in the total quantity, i.e. 100 mass%, of film 1 according to the present invention is preferably 15 to 60 mass%, more preferably 20 to 55 mass%, and still more preferably 25 to 50 mass%.

(Combination of thermoplastic resins (a2) other than polylactic acid based resin (a1))

There are no specific limitations on the combination of the thermoplastic resins (a2) other than the polylactic acid based resin (a1) in film 1 according to the present invention, and any appropriate resins other than the polylactic acid based resin (a1) may be used. Among others, the combination of a resin based plasticizer (a21) and a thermoplastic resin (a22) that is not a resin based plasticizer is preferable from the viewpoint of improving the moisture permeability.

Furthermore, it is particularly preferable that at least one resin selected from the group consisting of block copolymers containing polyether based segment and polylactic acid based segment and block copolymers containing polyester based segment and polylactic acid based segment, used as resin based plasticizer (a21), be combined with at least one resin selected from the group consisting of aliphatic polyester based resins and aliphatic aromatic polyester based resins, used as thermoplastic resin (a22) that is not a resin based plasticizer. It should be noted that the aliphatic polyester based resin in the thermoplastic resin (a22) that is not a resin based plasticizer does not contain the polylactic acid based resin (a1).

The aliphatic polyester based resin and the aliphatic aromatic polyester based resin to be combined with at least one resin selected from the group consisting of block copolymers containing polyether based segment and polylactic acid based segment and block copolymers containing polyester based segment and polylactic acid based segment is preferably polybutylene succinate based resin and poly(butylene adipate - terephthalate), respectively. In particular, polybutylene succinate based resin is the most preferable of them from the viewpoint of compatibility with the polylactic acid based resin (a1) and resin based plasticizer (a21).

When the thermoplastic resin (a2) contained in film 1 according to the present invention is a combination of one of various resin based plasticizers (a21) and a thermoplastic resin (a22) that is not a resin based plasticizer, their ratio by mass, which is represented as (various resin based plasticizers (a21) / thermoplastic resin (a22) that is not a resin based plasticizer), is preferably (5/95) to (95/5), more preferably (10/90) to (80/20), still more preferably (20/80) to (60/40).

(Filler (B) in film 1)

It is important for film 1 according to the present invention to contain a filler (B) in an amount of 1 to 70 mass% relative to the total quantity, i.e. 100 mass%, of the film. The film will be inferior in degradability if the content of the filler (B) is less than 1 mass% while the film will be inferior in water resistance if the content of the filler (B) is more than 70 mass%.

Here, the filler (B) refers to a substance to be added as a base material to improved specific characteristics or an inactive substance to be added for a specific purpose such as increasing the weight, increasing the volume, and reducing the product price. An inorganic filler and/or organic filler can be used as the filler (B).

Useful inorganic fillers include various carbonates such as calcium carbonate, magnesium carbonate, and barium carbonate; various sulfates such as magnesium sulfate, barium sulfate, and calcium sulfate; various oxides such as zinc oxide, silicon oxide (silica), zirconium oxide, magnesium oxide, calcium oxide, titanium oxide, magnesium oxide, iron oxide, alumina; hydroxides such as aluminum hydroxide; composite oxides such as silicate mineral, hydroxyapatite, mica, talc, kaolin, clay, montmorillonite, and zeolite; various phosphates such as lithium phosphate, calcium phosphate, and magnesium phosphate; and other various salts such as lithium chloride and lithium fluoride.

Useful organic fillers include oxalic acid salt such as calcium oxalate; terephthalates such as calcium, barium, zinc, manganese, and magnesium; fine particles of a homopolymer or a copolymer produced from vinyl based monomers such as divinylbenzene, styrene, acrylic acid, and methacrylic acid; organic fine particles containing, for example, polytetrafluoroethylene, benzoguanamine resin, thermosetting epoxy resin, unsaturated polyester resin, thermosetting urea resin, and thermosetting phenol resin; cellulose based powders such as wood powder and pulp powder; chip-like materials such as hulls, wood chips, bean curd refuse, ground waste paper, and ground clothing; vegetable fibers such as cotton fiber, hemp fiber, bamboo fiber, wood fiber, kenaf fiber, jute fiber, banana fiber, and coconut fiber, animal fibers such as silk, wool, angora, cashmere, and camel, and synthetic fibers such as polyester fiber, nylon fiber, and acrylic fiber.

Of these fillers (B), calcium carbonate, barium carbonate, barium sulfate, calcium sulfate, silicon oxide (silica), titanium oxide, mica, talc, kaolin, clay, and montmorillonite are preferable from the viewpoint of improving moisture permeability of a film, maintaining mechanical characteristics, such as strength and elongation percentage, and reducing the costs.

There are no specific limitations on the average particle diameter of such inorganic fillers and organic fillers, but it is preferably 0.01 to 10 $\mu$m. If the filler (B) used has an average particle diameter of 0.01 $\mu$m or more, the film can contain the filler at a high content, allowing the film to have the potential of being improved in porosity and moisture permeability, while an average particle diameter of 10 $\mu$m or less allows the film to have a high stretchability, allowing it to have the potential of being improved in porosity and moisture permeability. The average particle diameter of the filler (B) is more preferably 0.1 to 8 $\mu$m, still more preferably 0.5 to 5 $\mu$m, and most preferably 1 to 3 $\mu$m. An average particle diameter as referred to herein is the average particle diameter at a 50% cumulative distribution determined by laser diffraction scattering.

The filler (B) to be used for film 1 according to the present invention may be surface-treated as required with a compound that contains at least one or more functional groups selected from the group consisting of hydroxyl group, amino group, amide groups, carboxyl groups, glycidyl groups, acid anhydride groups, carbodiimide groups, oxazoline groups, and phosphate groups. If the filler (B) used has a treated surface, the affinity between the filler (B) and the thermoplastic resin (A), i.e. the matrix resin, increases, which serves effectively for suppressing the coagulation of the filler (B) and improving its dispersibility, allowing the filler (B) to be dispersed uniformly in a film.

To improve the dispersibility of the filler (B) in a film, it is preferable to add a dispersing agent to film 1 according to the present invention.

Here, the content of the filler (B) in the total quantity, i.e. 100 mass%, of film 1 according to the present invention is preferably 10 to 65 mass%, more preferably 20 to 60 mass%, and still more preferably 30 to 50 mass%.

(Porosity of film 1)

It is important for film 1 according to the present invention to have a porosity of 80% or less. The film may lack in water resistance if the porosity is more than 80%. From such a viewpoint, the porosity is preferably 70% or less, more preferably 60% or less, and still more preferably 50% or less. The porosity is also preferably 1% or more to allow the film to have moisture permeability, and from the same viewpoint, the porosity is more preferably 10% or more, still more preferably 15% or more, particularly preferably 25% or more, and most preferably 30% or more.

A good method to realize a porosity in the above range is to adjust the content of the filler (B) in the range specified above and produce a film by the production process described later particularly with the draw ratio maintained in the preferable range. Furthermore, the porosity can be adjusted efficiently by using an appropriate combination of thermoplastic resins (a2) other than the polylactic acid based resin (a1) at an appropriate ratio as described previously.

(Tear strength)

It is important for film 1 according to the present invention to have a tear strength of 200 mN or less in a direction. Its degradability will not be sufficiently high if the tear strength is more than 200 mN in all directions. The tear strength is preferably 100 mN or less, more preferably 50 mN or less, and still more preferably 20 mN or less, in one direction. There are no specific limitations on the lower limit of the tear strength in such a direction, but it is practically 0.5 mN or more.

There are no specific limitations on the method to be used to adjust the tear strength at 200 mN or less in one direction, and for example, a good method is to carry out the film production process described later particularly with the draw ratio maintained in the preferable range.

(Film 2)

Film 2 according to the present invention is a film containing a thermoplastic resin (A), and a hydrophilic resin (A2) in an amount of 1 to 40 mass% of the total quantity, i.e. 100 mass%, of the film, and having a tear strength of 200 mN or less in a direction and a tensile strength of less than 15 MPa in a direction.

(Thermoplastic resin (A) in film 2)

Film 2 according to the present invention contains a thermoplastic resin (A). The thermoplastic resin (A1) in film 2 may be of a material that can be used for film 1 according to the present invention.

(Biodegradable resin (A1) in film 2)

The thermoplastic resin (A) contained in film 2 according to the present invention preferably contains a biodegradable resin (A1). The biodegradable resin (A1) in film 2 may be of a material that can be used for film 1 according to the present invention.

Among others, the biodegradable resin (A1) is preferably a polylactic acid based resin (a1) from the viewpoint of biomass properties, cost, and processability. The polylactic acid based resin (a1) used in film 2 according to the present invention may be of a material that can be used for film 1 according to the present invention.

The crystalline polylactic acid based resin (a11) and amorphous polylactic acid based resin (a 12) used for film 2 according to the present invention may be of materials that can be used for film 1 according to the present invention. As in the case of film 1 according to the present invention, the polylactic acid based resin (a1) used as the biodegradable resin (A1) is preferably a mixture of a crystalline polylactic acid based resin (a11) and an amorphous polylactic acid based resin (a12), and the content by mass of the acid based resin (a11) is preferably 5 to 60 mass%, more preferably 10 to 50 mass%, and still more preferably 20 to 40 mass%, relative to the total quantity, which assumed to be 100 mass%, of the polylactic acid based resin (a1) in film 2 according to the present invention (relative to the total quantity, which assumed to be 100 mass%, of the crystalline polylactic acid based resin (a11) and the amorphous polylactic acid based resin (a12)).

(Hydrophilic resin (A2))

Film 2 according to the present invention contains a hydrophilic resin (A2) in an amount of 1 to 40 mass% relative to the total quantity, i.e. 100 mass%, of the film. The hydrophilic resin (A2) referred to here is a polymer compound that dissolves or swells in water and major examples include polyethylene glycol, polyvinyl pyrolidone, polyacrylamide, polyvinyl butyral, polyether ester amide, poly(N-methylol acrylamide), hydroxyethyl cellulose, methyl cellulose, hydroxypropyl cellulose, carboxymethyl cellulose, other types of modified cellulose, polyvinyl alcohol (PVA), water-soluble polyester resin, water-soluble polyvinyl acetal, poly-N-vinyl acetamide, polyacrylamide, polyacryloylmorpholine, polyhydroxy acrylic acrylate, polyacrylic acid, gelatin, and casein, as well as water-soluble derivatives thereof and copolymers thereof. Here, the hydrophilic resin (A2) is preferably the same as that contained in the thermoplastic resin (A). Of the materials cited for the thermoplastic resin (a2) other than the polylactic acid based resin (a1) of film 1 according to the present invention, those which dissolve or swell in water are also used suitably for hydrophilic resin (A2). If containing a hydrophilic resin (A2), film 2 according to the present invention can be degraded particularly in water while maintaining the mechanical characteristics of the film. For use as hydrophilic resin (A2), water-soluble and water-swellable ones selected from the materials cited for the thermoplastic resin (a2) other than the polylactic acid based resin (a1) of film 1 according to the present invention are more preferable. Furthermore, the use of a material cited for the resin based plasticizer (a21) in film 1 according to the present invention is more preferable in that the film can be plasticized and made degradable in water while maintaining the overall biodegradability. If the thermoplastic resin (A) is a polylactic acid based resin (a1), in particular, it is particularly preferable for the hydrophilic resin to be a block copolymer plasticizer cited for film 1 according to the present invention because the film can be made degradable in water while depressing the bleed-out.

If the content of the hydrophilic resin (A2) in film 2 according to the present invention is less than 1 mass%, the content of the hydrophilic resin (A2) in the film will be too small, leading to a decrease in degradability in water. If it is more than 40 mass%, on the other hand, the content of the hydrophilic resin will be too large, possibly leading to a decrease in stretchability or a decrease in degradability. It is preferably 5 to 35 mass%, more preferably 10 to 30 mass%, and still more preferably 15 to 30 mass%.

(Thermoplastic resin (a2) other than polylactic acid based resin (a1))

In the case where the thermoplastic resin (A) is a polylactic acid based resin, it is preferable for film 2 according to the present invention to contain a thermoplastic resin (a2) other than the polylactic acid based resin (a1) from the viewpoint of improvement in moisture permeability and degradability. The thermoplastic resin (a2) is preferably of a material selected from those cited for film 1 according to the present invention. It may be of a material that serve as hydrophilic resin (A2) as well.

(Filler (B) in film 2)

It is preferable for film 2 according to the present invention to contain a filler (B) in an amount of 1 to 70 mass% relative to the total quantity, i.e. 100 mass%, of the film from the viewpoint of improvement in moisture permeability and degradability. The filler (B) may be of a material selected from those cited for film 1 according to the present invention.

Here, the content of the filler (B) is preferably 10 to 65 mass%, more preferably 20 to 60 mass%, and still more preferably 30 to 50 mass%, in the total quantity, i.e. 100 mass%, of the film.

(Tear strength of film 2)

It is important for film 2 according to the present invention to have a tear strength of 200 mN or less in a direction. Its degradability will not be sufficiently high if the tear strength is more than 200 mN in all directions. The tear strength is preferably 100 mN or less, more preferably 50 mN or less, and still more preferably 20 mN or less, in one direction. There are no specific limitations on the lower limit of the tear strength in such a direction, but it is practically 0.5 mN or more.

There are no specific limitations on the method to be used to adjust the tear strength at 200 mN or less in one direction, but for example, a good method is to carry out the production process described later particularly with the draw ratio maintained in the preferable range.

(Porosity of film 2)

It is important for film 2 according to the present invention to have a porosity of 80% or less. The film may lack in water resistance if the porosity is more than 80%. From such a viewpoint, it is preferably 70% or less, more preferably 60% or less, and still more preferably 50% or less. The porosity is also preferably 1 % or more to allow the film to have moisture permeability, and from the same viewpoint, the porosity is more preferably 4% or more, still more preferably 15% or more, particularly preferably 25% or more, and most preferably 30% or more. A good method to realize a porosity in these ranges is to adjust the content of the filler (B) in the range specified above and produce a film by a production method described later particularly with the draw ratio maintained in the preferable range. Furthermore, the porosity can be adjusted efficiently by using an appropriate combination of thermoplastic resins (a2) other than the polylactic acid based resin (a1) at an appropriate ratio as described previously.

(Tensile strength)

It is important for film 1 and film 2 according to the present invention to have a tensile strength of less than 15 MPa in a direction. Their degradability will not be sufficiently high if the tensile strength is 15 MPa or more in all directions. The tensile strength in such a direction is preferably less than 10 MPa, more preferably less than 7 MPa, and still more preferably less than 5 MPa. There are no specific limitations on the lower limit of the tensile strength in such a direction, but it is practically 0.5 MPa or more.

There are no specific limitations on the method to be used to adjust the tensile strength at less than 15 MPa in one direction, but good methods include, for example, adjusting the content of the filler (B) in the aforementioned preferable range or performing a production method as described later with the draw ratio maintained at 2 or less in that direction while maintaining the draw ratio at 2 or more in the perpendicular direction, when carrying out the film production process.

For film 1 and film 2 according to the present invention, the tensile strength is preferably 15 MPa or more in the direction perpendicular to that in which the tensile strength is less than 15 MPa. If the tensile strength is 15 MPa or more in the direction perpendicular to that in which the tensile strength is less than 15 MPa, it is preferable because the film can maintain a sufficiently high mechanical strength and a high film processability. The tensile strength in the direction perpendicular to that in which the tensile strength is less than 15 MPa is more preferably 25 MPa or more, still more preferably 40 MPa or more. There are no specific limitations on the upper limits of the tensile strength in the direction perpendicular to that in which the tensile strength is less than 15 MPa, but it is preferably 250 MPa or less.

There are no specific limitations on the method to be used to allow the tensile strength in the direction perpendicular to that in which the tensile strength is less than 15 MPa to be 15 MPa or more, but a good method is to perform a production method as described later for carrying out the film production process with the draw ratio maintained at 2 or more in the relevant direction.

(Degree of molecular orientation MOR-c)

It is preferable for film 1 and film 2 according to the present invention to have a degree of molecular orientation MOR-c of 2 to 8. A MOR-c of 2 or more ensures a film with a high moisture permeability and degradability while a MOR-c of 8 or less ensures a film with a high water resistance. The degree of molecular orientation MOR-c is more preferably 2.3 to 6, still more preferably 2.7 to 4. A method to be used for measuring the degree of molecular orientation MOR-c for the present invention will be described later.

There are no specific limitations on the method to be used for adjust the degree of molecular orientation MOR-c to 2 to 8, a good method is, for example, to produce a film with the ratio between the draw ratio in the length direction and that in the width direction controlled to 2 to 10 or 1/ 10 to 1/2.

(Thickness)

It is preferable for film 1 and film 2 according to the present invention to have a film thickness of 5 to 200 $\mu$m. Maintaining a film thickness of 5 $\mu$m or more ensures that the resulting film will have high bending strength, high handleability, good roll appearance, and good unwinding properties. Maintaining a film thickness of 200 $\mu$m or less ensures that the resulting film will have a high flexibility and if having a porosity in a specific range, the film will have a high moisture permeability as well. In the case of using the inflation molding technique for film production, in particular, the weight of the film itself serves to prevent the destabilization of bubbles. The film thickness is more preferably 7 to 150 $\mu$m, still more preferably 10 to 100 $\mu$m, and still more preferably 12 to 50 $\mu$m.

(Organic lubricant)

It is preferable for film 1 and film 2 according to the present invention contain an organic lubricant in an amount of 0.1 to 5 mass% in the entire quantity, i.e. 100 mass%, of the film from the viewpoint of prevention of the blocking of compound pellets or the film.

Useful organic lubricants include, for example, those based on a fatty acid amide such as stearate amide and ethylene bisstearate amide.

(Additives)

Film 1 and film 2 according to the present invention may contain additives other than those described above as long as they do not impair the advantageous effect of the present invention. Useful examples include, for instance, generally known plasticizers, antioxidants, ultraviolet ray stabilization agents, color protection agents, delustering agents, antibacterial agents, deodorants, flame retardants, weathering agents, antistatic agents, antioxidants, ion exchange agents, tackifiers, antifoaming agents, color pigments, dyes, crystal nucleating agents, polymer chain extension agents, and polymer chain end capping agents.

(Production method)

In the next place, a method for producing film 1 and film 2 according to the present invention is described in detail, but it should be understood that the invention is not construed as being limited thereto.

A composition to be used to produce film 1 or film 2 according to the present invention, namely, a composition containing a thermoplastic resin (A), biodegradable resin (A1), thermoplastic resin (a2), and filler (B), as well as other components such as organic lubricant that are added as required, can be produced by dissolving these components in a solvent, mixing them uniformly, and then removing the solvent to separate a composition, but the use of a melt-kneading process in which a composition is produced by melt-kneading the components is preferable because this method is practical in that it does not require steps for dissolving the starting materials in a solvent and subsequently removing the solvent. There are no specific limitations on the melt-kneading method, and commonly-used generally-known mixers including kneader, roll mill, Banbury mixer, and uniaxial or twin screw extruder may be used. In particular, it is preferable to use a uniaxial or twin screw extruder from the viewpoint of productivity.

The temperature used for the melt kneading process is preferably in the range of 150°C to 240°C when the thermoplastic resin (A) contains a biodegradable resin (A1), and it is more preferably in the range of 160°C to 210°C, still more preferably 190°C to 210°C, from the viewpoint of the prevention of degradation of the thermoplastic resin (A) and the biodegradable resin (A1) in particular.

Film 1 and film 2 according to the present invention can be produced from a composition prepared as described above by an existing film production method such as the generally known inflation molding method, tubular method, and T-die cast method.

When film 1 and film 2 according to the present invention is produced by, for example, pelletizing a composition as prepared by the method described above, followed by re-melt-kneading, and extrusion for film production, it is preferable to dry the pellets at 60 to 100°C for 6 hours or more to reduce the water content in the composition to 500 ppm (by mass) or less. It is preferable, furthermore, to vacuum-dry it under a highly reduced pressure of 10 Torr or less in order to decrease the water and low-molecular-weight contents in the composition. This is preferable because a decrease in the water content in the composition to 500 ppm (by mass) or less and a decrease in the water and low-molecular-weight contents serve to prevent the hydrolysis of the resin from taking place during the melt-kneading step, thereby preventing a decrease in molecular weight, providing a composition with a melt viscosity of a moderate level, and stabilizing the film production process. From a similar point of view, it is preferable to use a vent type twin screw extruder for pelletizing of the composition or melt-extrusion/film production and perform melt-extrusion while removing water and volatile components such as low molecular weight substances.

To produce film 1 and film 2 according to the present invention by T-die casting, the following method, for instance, can be used. A composition as prepared as described above is melt-extruded by a vent-type twin screw extruder, discharged through a slit-type die with lip intervals of 0.5 to 3 mm, and brought in contact with a metallic casting drum for cooling set to a surface temperature of 0 to 40°C by applying static electricity using a wire-like electrode with a diameter of 0.5 mm, thereby providing a non-oriented cast film.

The non-oriented film thus produced is conveyed on heating rollers to heat it to a temperature to be used for longitudinal stretching. For this heating, an auxiliary heating device such as infrared ray heater may be used in combination. The stretching temperature is preferably in the range of 50°C to 100°C, more preferably 55°C to 95°C, and still more preferably 60°C to 90°C. The non-oriented film thus heated is stretched in one step or in two or more multiple steps in the film's length direction by making use of the differences in circumferential speed between heating rollers. The total draw ratio is preferably 3 to 10 and depending on the resin constituting the film, it is more preferably 5.1 to 10 when, for example, aliphatic aromatic polyester based resin is contained, and still more preferably 6 to 9. It is particularly preferably 7 to 8. When an aliphatic polyester is contained, it is more preferably 3.5 to 8, still more preferably 4 to 7. It is particularly preferably 5 to 6.

If required, the film thus uniaxially stretched may be first cooled, introduced into a tenter with the ends of the film held by clips, and stretched in the width direction. The stretching temperature is preferably in the range of 50°C to 90°C, more preferably 55°C to 85°C, and still more preferably 60°C to 80°C. There are no specific limitations on the draw ratio to be used unless it impairs the advantageous effect of the invention.

Then, this stretched film is heat-treated under tension with the width-directional size being fixed or while being relaxed in the width direction. The preferable heat treatment temperature depends on the resin constituting the film, and for example, it is 90°C to 150°C when an aliphatic aromatic polyester based resin is contained, and more preferably 100°C to 140°C, still more preferably 110°C to 130°C. When an aliphatic polyester is contained, it is 50°C to 130°C, preferably 60°C to 120°C, and more preferably 70°C to 110°C . To decrease the degree of heat shrinkage of the film, the heat treatment temperature may be increased. The heat treatment is preferably continued for 0.2 to 30 seconds, though there are no specific limitations. The degree of relaxation is preferably 1% to 10%, more preferably 3% to 7%, and still more preferably 3% to 5%, from the viewpoint of decreasing the degree of heat shrinkage in the width direction.

Subsequently, the film is cooled and wound up to provide an intended film.

If T-die casting is carried out to produce film 1 and film 2 according to the present invention with a porosity of 80% or less, it is preferable to perform the stretching step at a preferable temperature and draw ratio as described above. The film may be stretched uniaxially in either the longitudinal or the transverse direction, or biaxially in both the longitudinal and the transverse directions. In addition, longitudinal re-stretching and/or transverse re-stretching may be carried out as required.

The present invention provides a film that is high in water resistance and degradability that can be applied to various articles including agricultural materials such as mulching film, forestry materials such as fumigating sheets, hygienic materials such as napkin, paper diaper, and liner, and various packaging materials such as shopping bag, garbage bag, food bag, and other industrial packages.

Examples

The present invention will be illustrated below in greater detail with reference to Examples, but it should be understood that the invention is not construed as being limited thereto.

[Measurement and evaluation methods]

Measurements and evaluations described in Examples were carried out under the following conditions.

(1) Porosity (%)

A specimen of 30 mm × 40 mm was cut out from a film. An electronic gravimeter (SD-120L, manufactured by Mirage Trading Co., Ltd.) was used for specific gravity determination in an atmosphere of room temperature of 23°C and a relative humidity of 65%. Three measurements were made and their average was calculated to represent the specific gravity p of the film.

Then, the film that has undergone the measurement was subjected to hot pressing at 220°C and 5 MPa, and subsequently quenched with water of 25°C to prepare a sheet completely free from pores. The specific gravity of this sheet was measured by the same method as described above and the average was taken as the specific gravity d. From the specific gravity p and the aforementioned specific gravity d of the film, the porosity was calculated by the equation given below.

$$\text{Porosity (\%)} = [(d - \rho) / d] \times 100$$

(2) Tear strength

The tear strength was measured in an atmosphere of room temperature of 23°C and a relative humidity of 65%.

Specifically, a strip-shaped test piece with a width of 40 mm and a length of 150 mm was prepared and a cut of 75 mm was made at the width-directional center. Five measurements each were taken in the length and the width direction according to JIS K7128-1 (1998) (trouser tear testing method) at a speed of 200 mm/min and their average was calculated to represent the tear strength.

(3) Tensile strength

Tensilon UCT-100 manufactured by Orientec Co., Ltd., was used in an atmosphere of room temperature of 23°C and a relative humidity of 65% for determination of the tensile strength.

Specifically, strip specimens with a length of 150 mm in the measuring direction and a width of 10 mm were cut out, and 10 measurements each were taken in the length and the width direction with an initial tensile chuck distance of 50 mm and a tension speed of 200 mm/min according to the method specified in JIS K-7127 (1999), followed by calculating their average to represent the tensile strength.

(4) Degree of molecular orientation MOR-c

A specimen with a sampling size of 10 cm × 10 cm was cut out from the width-directional center of a film. A MOA-2001 Molecular Orientation Analyzer manufactured by KS Systems (currently Oji Scientific Instruments) was used to measure MOR-c. Here, the thickness of the specimen was measured at 9 points in the central region and the average ($\mu$m) of the thickness measurements was fed to the molecular orientation analyzer to determine the value of MOR-c.

(5) Degradability

Of the tensile strength measures taken in (3) in the length and the width direction, the smaller was used for evaluation according to the criteria given below. For the present invention, a specimen ranked as A, B, or C was judged to have degradability.

A: less than 5 MPa
B: 5 MPa or more and less than 10 MPa
C: 10 MPa or more and less than 15 MPa
D: 15 MPa or more

(6) Water disintegrability

In a 2,000 ml beaker, 800 ml of water and four 5 cm × 5 cm specimens were added and stirred by a magnetic stirrer at 23°C for 48 hours at a rotating speed 750 rpm, followed by taking the disintegrated pieces out of the beaker and counting them.
Based on the number of disintegrated pieces, evaluations were made according to the following criteria.

A: 12 or more
B: 8 or more and less than 12
C: 5 or more and 7 or less
D: 4, that is, free of disintegration

(7) Moisture permeability

Using a thermo-hygrostat set at 25°C and 90% RH, the moisture permeability (g/(m$^2$·day)) was measured according to the method specified in JIS Z0208 (1976).
Based on the measurement, the moisture permeability was evaluated according to the following criteria.

A: 1,500 g/(m$^2$·day) or more
B: 1,000 g/(m$^2$·day) or more and less than 1,500 g/(m$^2$·day)
C: 300 g/(m$^2$·day) or more and less than 1,000 g/(m$^2$·day)
D: less than 300 g/(m$^2$·day)

(8) Water resistance

The water pressure resistance (mm) was measured by the A-method (low water pressure method) specified in JIS L1092 (2009) with metal gauze sandwiched between sheets of packing material and further sandwiched between a film specimen and a clamp. Here, since the upper measuring limit was 1,500 mm, the measurement is shown as "1500<" when 1,500 mm was exceeded.
Based on the measurement, the water pressure resistance was evaluated according to the following criteria.

A: 1,000 mm or more
B: 750 mm or more and less than 1,000 mm
C: 400 mm or more and less than 750 mm
D: less than 400 mm

[Thermoplastic resin (A)]

(A1-1)

Polylactic acid based resin (a1) used as biodegradable resin (A1). A crystalline polylactic acid based resin (a11) with a mass average molecular weight of 200,000, D-form content of 1.4 mol%, melting point of 166°C, and biodegradation degree of 99% (40days, ISO 14855).

(A1-2)

Polylactic acid based resin (a1) used as biodegradable resin (A1). An amorphous polylactic acid based resin (a12) with a mass average molecular weight of 200,000, D-form content of 12.0 mol%, no definite melting point, and biodegradation degree of 99% (40days, ISO 14855).

The above-mentioned mass average molecular weight was measured using Warters 2690 manufactured by Nihon Waters K.K. at a column temperature of 40°C along with polymethyl methacrylate as reference, and also using a chloroform solvent.

To determine the melting point of a polylactic acid based resin (a1), it was first heated for 24 hours in a hot air oven at 100°C, and then a 5 mg specimen was taken on the aluminum tray in an RDC 220 differential scanning calorimeter manufactured by Seiko Instruments Inc. and heated from 25°C up to 250°C at a heating rate of 20°C/min while measuring the temperature of the crystal melting peak.

[Thermoplastic resin (a2) other than polylactic acid based resin (a1)]

(a2-1)

A thermoplastic resin (a22) that is not a resin based plasticizer. Polybutylene adipate - terephthalate resin (trade name: Ecoflex FBX7011, manufactured by BASF) with a biodegradation degree of 90% (80 days, ISO 14855).

(a2-2)

A thermoplastic resin (a22) that is not a resin based plasticizer. Polybutylene succinate based resin (trade name: GSPla (registered trademark) AZ91T, manufactured by Mitsubishi Chemical Corporation) with a biodegradation degree of 85% (40 days, ISO 14855).

(a2-3)

In a reaction container equipped with a stirrer, 62 parts by mass of polyethylene glycol with a number average molecular weight of 8,000, 38 parts by mass of L-lactide, and 0.05 part by mass of tin octylate were mixed and polymerized in a nitrogen atmosphere at 160°C for 3 hours to produce a block copolymer plasticizer (resin based plasticizer (a21) to serve as hydrophilic resin (A2)) having polylactic acid segment with a number average molecular weight of 2,500 at each end of polyethylene glycol with a number average molecular weight of 8,000. The biodegradation degree was 80% (300days, ISO 14855).

[Plasticizer (P)]

Acetyl tributyl citrate (trade name: Citroflex A-4, manufactured by Pfizer)

[Filler (B)]

(B-1)

Calcium carbonate (trade name: Topflow H200, manufactured by Ajinomoto Fine-Techno Co., Inc., average particle diameter 1.7 $\mu$m)

(B-2)

Calcium carbonate (trade name: Caltex R, manufactured by Maruo Calcium Co., Ltd., average particle diameter 2.8 $\mu$m)

(Example 1-1)

A mixture of 9 mass% of thermoplastic resin (A1-1), 26 mass% of thermoplastic resin (A1-2), 12 mass% of thermoplastic resin (a2-1) other than polylactic acid based resin, 13 mass% of thermoplastic resin (a2-3) other than polylactic acid based resin, and 40 mass% of filler (B1) was fed to a vacuum vent type twin screw extruder with a screw diameter of 44 mm set to a cylinder temperature of 190°C and melt-kneaded while deaerating the extruder from the vacuum vent, followed by homogenization and pelletization to provide a composition.

This composition in the form of pellets was dried under reduced pressure at a temperature of 60°C for 12 hours in a rotary drum type vacuum dryer.

Pellets of this composition were supplied to a single screw extruder with a cylinder temperature of 190°C, extruded through a T-die at a temperature of 190°C to provide a film, which is then cast onto a drum cooled at 20°C to prepare a non-oriented film. This non-oriented film was stretched six times in the length direction by a roller type stretching machine at temperature of 70°C. This uniaxially oriented film was once cooled on a cooling roller and then, with both ends gripped by clips, introduced into a tenter, where it was heat-treated at a temperature of 110°C for 10 seconds while maintained at a constant length to provide a film with a thickness of 20 $\mu$m. Characteristics of the resulting film are shown in Table 1.

(Examples 1-2 to 1-4, 1-6 to 1-12, and 2-1 to 2-9, and Comparative examples 1-2 and 2-2)

The same procedure as in Example 1-1 except for using film compositions and production conditions as given in Tables 1 and 2 was carried out to produce films with a thickness of 20 $\mu$m. Characteristics of the resulting films are shown in Tables 1 and 2.

(Example 1-5)

A mixture of 6 mass% of thermoplastic resin (A1-1), 19 mass% of thermoplastic resin (A1-2), 12 mass% of thermoplastic resin (a2-1) other than polylactic acid based resin, 23 mass% of thermoplastic resin (a2-3) other than polylactic acid based resin, and 40 mass% of filler (B1) was fed to a vacuum vent type twin screw extruder with a screw diameter of 44 mm set to a cylinder temperature of 190°C and melt-kneaded while deaerating the extruder from the vacuum vent, followed by homogenization and pelletization to provide a composition.

Pellets of the composition were dried under reduced pressure at a temperature of 60°C for 12 hours in a rotary drum type vacuum dryer.

Pellets of the composition were supplied to a single screw extruder with a cylinder temperature of 190°C, extruded through a T-die at a temperature of 190°C to provide a film, which is then cast onto a drum cooled at 20°C to prepare a non-oriented film. This non-oriented film was stretched three times in the length direction by a roller type stretching machine at temperature of 70°C. This uniaxially oriented film was once cooled on a cooling roller and then, with both ends gripped by clips, introduced into a tenter, where it was stretched three times in the width direction at temperature 70°C. Subsequently, it was heat-treated for 10 seconds at temperature 110°C while maintained at a constant length, followed by 5% relaxation treatment in the width direction to provide a film with a thickness of 20 $\mu$m. Characteristics of the resulting film are shown in Table 1.

(Comparative examples 1-1 and 2-1)

A mixture of 9 mass% of thermoplastic resin (A1-1), 26 mass% of thermoplastic resin (A1-2), 12 mass% of thermoplastic resin (a2-1) other than polylactic acid based resin, 13 mass% of thermoplastic resin (a2-3), and 40 mass% of filler (B1) was fed to a vacuum vent type twin screw extruder with a screw diameter of 44 mm set to a cylinder temperature of 190°C and melt-kneaded while deaerating the extruder from the vacuum vent, followed by homogenization and pelletization to provide a composition.

Pellets of the composition were dried under reduced pressure at a temperature of 60°C for 12 hours in a rotary drum type vacuum dryer.

Pellets of the composition were supplied to a single screw extruder with a cylinder temperature of 190°C, extruded through a T-die at a temperature of 190°C to provide a film, which is then cast onto a drum cooled at 20°C to prepare a non-oriented film with a thickness of 20 $\mu$m. Characteristics of the resulting film are shown in Table 2.

(Comparative examples 1-3 and 2-3)

The same procedure as in Example 1-5 except for using film compositions and production conditions as given in Table 2 was carried out to produce a film with a thickness of 20 $\mu$m. Characteristics of the resulting film are shown in Table 2.

(Comparative examples 1-4 and 2-4)

Except for using film compositions as given in Table 2, the same procedure as in Example 1-1 was carried out in an attempt to provide a film, but the stretching step was not carried out successfully.
[Table 1-1]

[Table 1-1]

| | | | Example 1-1 | Example 1-2 | Example 1-3 | Example 1-4 | Example 1-5 | Example 1-6 | Example 1-7 | Example 1-8 | Example 1-9 | Example 1-10 | Example 1-11 | Example 1-12 |
|---|---|---|---|---|---|---|---|---|---|---|---|---|---|---|
| Composition | thermoplastic resin (A) | type | A1-1+A1-2 | A1-1+A1-2 | A1-1+A1-2 | A1-1+A1-2 | A1-1+A1-2 | A1-1+A1-2 | A1-1+A1-2 | A1-1+A1-2 | A1-1+A1-2 | A1-1+A1-2 | A1-1+A1-2 | A1-1+A1-2 |
| | | mass% | 9+26 | 6+19 | 9+26 | 9+26 | 6+19 | 12+35 | 15+45 | 9+26 | 13+40 | 5+15 | 13+37 | 15+45 |
| | thermoplastic resin (a2-1 to a2-3), plasticizer (P) | type | a2-1+a2-3 | a2-1+a2-3 | a2-1+a2-3 | a2-1+a2-3 | a2-1+a2-3 | a2-3 | - | a2-1+P | a2-1+a2-3 | a2-1+a2-3 | a2-1+a2-3 | a2-1+a2-3 |
| | | mass% | 12+13 | 12+23 | 12+13 | 12+13 | 12+23 | 13 | 0 | 12+13 | 18+19 | 7+8 | 30+20 | 20+20 |
| | filler (B) | type | B1 | B1 | B1 | B1 | B1 | B1 | B1 | B1 | B1 | B1 | - | - |
| | | mass% | 40 | 40 | 40 | 40 | 40 | 40 | 40 | 40 | 10 | 65 | - | - |
| Production conditions | longitudinal drawing | °C | 70 | 70 | 70 | 70 | 70 | 70 | 80 | 70 | 70 | 70 | 70 | 70 |
| | | ratio | 8 | 8 | 5 | 4 | 3 | 8 | 5 | 8 | 8 | 5 | 8 | 8 |
| | transverse drawing | °C | - | - | - | - | 70 | - | - | - | - | - | - | - |
| | | ratio | - | - | - | - | 3 | - | - | - | - | - | - | - |
| Film's physical properties | porosity | % | 36 | 36 | 25 | 20 | 34 | 27 | 11 | 22 | 10 | 52 | 5 | 3 |
| | tear strength (MD/TD) | mN | 3/14 | 7/14 | 32/45 | 40/55 | 55/62 | 45/94 | 75/132 | 90/156 | 150/233 | 23/35 | 140/230 | 165/247 |
| | MOR-c | - | 3.2 | 2.7 | 2.5 | 2.1 | 1.1 | 4.8 | 4.1 | 3.5 | 6.5 | 2.8 | 6.6 | 6.6 |
| | tensile strength (MD/TD) | MPa | 113/4 | 44/3 | 76/11 | 65/14 | 22/14 | 92/9 | 80/14 | 83/8 | 81/8 | 60/13 | 140/10 | 165/10 |
| | degradability | - | A | A | C | C | C | B | C | B | B | C | C | C |
| | water disintegrability | - | A | A | B | C | D | B | C | C | B | C | C | C |
| | moisture permeability | - | B (1050) | B (1344) | C (539) | C (450) | A (1571) | C (716) | C (342) | C (430) | C (564) | C (953) | C (400) | D (288) |
| | water resistance | (mm) | A (1500<) | A (1500<) | A (1500<) | A (1500<) | A (1500<) | A (1500<) | A (1500<) | A (1500<) | A (1500<) | B (920) | A (1500<) | A (1500<) |

18

[Table 1-2]

[Table 1-2]

| Composition | thermoplastic resin (A) | type | A1-1+A1-2 | A1-1+A1-2 | A1-1+A1-2 | A1-1+A1-2 | A1-1+A1-2 | A1-1+A1-2 | A1-1+A1-2 | A1-1+A1-2 | A1-1+A1-2 |
|---|---|---|---|---|---|---|---|---|---|---|---|
| | | | Example 2-1 | Example 2-2 | Example 2-3 | Example 2-4 | Examples 2-5 | Example 2-6 | Example 2-7 | Example 2-8 | Example 2-9 |
| Composition | thermoplastic resin (A) | type | A1-1+A1-2 | A1-1+A1-2 | A1-1+A1-2 | A1-1+A1-2 | A1-1+A1-2 | A1-1+A1-2 | A1-1+A1-2 | A1-1+A1-2 | A1-1+A1-2 |
| | | mass% | 9+26 | 6+19 | 9+26 | 9+26 | 9+26 | 13+40 | 5+15 | 13+37 | 15+45 |
| | thermoplastic resin (a2-1 to a2-3), plasticizer (P) | type | a2-2+a2-3 | a2-2+a2-3 | a2-2+a2-3 | a2-2+a2-3 | a2-2+P | a2-2+a2-3 | a2-2+a2-3 | a2-2+a2-3 | a2-2+a2-3 |
| | | mass% | 12+13 | 12+23 | 12+13 | 12+13 | 12+13 | 18+19 | 7+8 | 30+20 | 20+20 |
| | filler (B) | type | B1 | B1 | B1 | B1 | B1 | B1 | B1 | - | - |
| | | mass% | 40 | 40 | 40 | 40 | 40 | 10 | 65 | - | - |
| Production conditions | longitudinal drawing | °C | 70 | 70 | 70 | 70 | 70 | 70 | 70 | 70 | 70 |
| | | ratio | 5.5 | 5.5 | 4.5 | 3.5 | 5.5 | 5.5 | 4.5 | 5.5 | 5.5 |
| | transverse drawing | °C | - | - | - | - | - | - | - | - | - |
| | | ratio | - | - | - | - | - | - | - | - | - |
| Film's physical properties | porosity | % | 40 | 40 | 29 | 25 | 26 | 14 | 56 | 4 | 2 |
| | tear strength (MD/TD) | mN | 4/14 | 8/14 | 33/45 | 41/55 | 91/156 | 150/233 | 24/35 | 141/230 | 166/247 |
| | MOR-c | - | 4.3 | 3.8 | 3.6 | 3 | 4.5 | 7.6 | 3.9 | 6.6 | 7.7 |
| | tensile strength (MD/TD) | MPa | 96/6 | 52/2 | 86/9 | 65/12 | 91/7 | 90/7 | 70/11 | 150/10 | 125/10 |
| | degradability | - | A | A | B | C | B | B | C | C | C |
| | water disintegrability | - | A | A | B | C | C | B | C | C | C |
| | moisture permeability | - | B (1250) | A (1555) | C (735) | C (650) | C (630) | C (772) | B (1157) | C (600) | D (290) |
| | water resistance | (mm) | A (1500<) | A (1500<) | A (1500<) | A (1500<) | A (1500<) | A (1500<) | B (920) | A (1500<) | A (1500<) |

[Table 2]

[Table 2]

| | | | Comparative example 1-1 | Comparative example 1-2 | Comparative example 1-3 | Comparative example 1-4 | Comparative example 2-1 | Comparative example 2-2 | Comparative example 2-3 | Comparative example 2-4 |
|---|---|---|---|---|---|---|---|---|---|---|
| Composition | thermoplastic resin (A) | type | A1-1+A1-2 | A1-1+A1-2 | A1-1+A1-2 | A1-1+A1-2 | A1-1+A1-2 | A1-1+A1-2 | A1-1+A1-2 | A1-1+A1-2 |
| | | mass% | 9+26 | 11+34 | 9+26 | 4+12 | 9+26 | 11+34 | 9+26 | 4+12 |
| | thermoplastic resin (a2-1 to a2-3), plasticizer (P) | type | a2-1+a2-3 | a2-1+a2-3 | a2-1+a2-3 | a2-1+a2-3 | a2-2+a2-3 | a2-2+a2-3 | a2-2+a2-3 | a2-2+a2-3 |
| | | mass% | 12+13 | 30+10 | 12+13 | 7+7 | 12+13 | 30+10 | 12+13 | 7+7 |
| | filler (B) | type | B1 | B1 | B2 | B1 | B1 | B1 | B2 | B1 |
| | | mass% | 40 | 15 | 40 | 75 | 40 | 15 | 40 | 75 |
| Production conditions | longitudinal drawing | °C | - | 70 | 70 | - | - | 70 | 70 | - |
| | | ratio | - | 1.5 | 4.2 | - | - | 1.5 | 3.5 | - |
| | transverse drawing | °C | - | - | 70 | - | - | - | 70 | - |
| | | ratio | - | - | 4.2 | - | - | - | 3.5 | - |
| Film's physical properties | porosity | % | 0 | 10 | 82 | unstretchable | 0 | 10 | 82 | unstretchable |
| | tear strength (MD/TD) | mN | 350/743 | 250/458 | 120/196 | | 351/743 | 251/458 | 121/196 | |
| | MOR-c | - | 1 | 1.2 | 1.1 | | 1 | 1.8 | 1.3 | |
| | tensile strength (MD/TD) | MPa | 110/150 | 50/70 | 14/10 | | 120/150 | 60/70 | 24/10 | |
| | degradability | - | D | D | C | | D | D | C | |
| | water disintegrability | - | D | D | D | | D | D | D | |
| | moisture permeability | - | D (240) | D (276) | A (2032) | | D (240) | D (290) | A (2232) | |
| | water resistance | (mm) | A (1500<) | A (1500<) | D (320) | | A (1500<) | A (1500<) | D (350) | |

EP 2 980 141 A1

Here, MD and TD in Tables 1-1 to 2 denote the film's length direction and the film's width direction, respectively.

Industrial Applicability

The present invention provides a film that is high in water resistance and degradability that can be applied to various articles that require water resistance and degradability including agricultural materials such as mulching film, forestry materials such as fumigating sheets, hygienic materials such as napkin, paper diaper, and liner, and various packaging materials such as shopping bag, garbage bag, food bag, and other industrial packages.

**Claims**

1. Film comprising a thermoplastic resin (A), and

    a filler (B) in an amount of 1 to 70 mass% of the total mass, i.e. 100 mass%, of the film, and

    having a porosity of 80% or less,

    a tear strength of 200 mN or less in a direction, and
    a tensile strength of less than 15 MPa in a direction.

2. Film as described in claim 1, wherein the thermoplastic resin (A) contains a biodegradable resin (A1).

3. Film as described in either claim 1 or 2, wherein the tensile strength in the direction perpendicular to that in which the tensile strength is less than 15 MPa is 15 MPa or more.

4. Film as described in any one of claims 1 to 3, wherein the degree of molecular orientation MOR-c is 2 to 8.

5. Film as described in any one of claims 2 to 4, wherein the biodegradable resin (A1) contains a polylactic acid based resin (a1).

6. Film as described in claim 5, wherein the thermoplastic resin (A) contains a thermoplastic resin (a2) other than the polylactic acid based resin (a1).

7. Film as described in claim 6, wherein the thermoplastic resin (a2) comprises a combination of

    at least one resin selected from the group consisting of block copolymers containing polyether based segment and polylactic acid based segment and block copolymers containing polyester based segment and polylactic acid based segment and
    at least one resin selected from the group consisting of aliphatic polyester based resins and aliphatic aromatic polyester based resins.

8. Film comprising a thermoplastic resin (A), and

    a hydrophilic resin (A2) in an amount of 1 to 40 mass% of the total mass, i.e. 100 mass%, of the film, and

    having a porosity of 80% or less,

    a tear strength of 200 mN or less in a direction, and
    a tensile strength of less than 15 MPa in a direction.

9. Film as described in claim 8, wherein the thermoplastic resin (A) contains a biodegradable resin (A1).

10. Film as described in either claim 8 or 9, wherein the tensile strength in the direction perpendicular to that in which the tensile strength is less than 15 MPa is 15 MPa or more.

11. Film as described in either claim 9 or 10, wherein the biodegradable resin (A1) is a polylactic acid based resin (a1).

## INTERNATIONAL SEARCH REPORT

| | International application No. |
|---|---|
| | PCT/JP2014/057754 |

**A. CLASSIFICATION OF SUBJECT MATTER**
*C08J9/00(2006.01)i*

According to International Patent Classification (IPC) or to both national classification and IPC

**B. FIELDS SEARCHED**

Minimum documentation searched (classification system followed by classification symbols)
C08J9/00

Documentation searched other than minimum documentation to the extent that such documents are included in the fields searched
Jitsuyo Shinan Koho          1922–1996    Jitsuyo Shinan Toroku Koho    1996–2014
Kokai Jitsuyo Shinan Koho    1971–2014    Toroku Jitsuyo Shinan Koho    1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2006-104460 A  (Yupo Corp.),<br>20 April 2006 (20.04.2006),<br>claim 1; 0010, 0023; each example; table 2<br>& WO 2006/028221 A1      & US 2007/0298228 A1<br>& EP 1792934 A1          & CN 101023124 A | 1-6<br>6-11 |
| X<br>Y | JP 9-291165 A  (Mitsubishi Chemical Corp.),<br>11 November 1997 (11.11.1997),<br>claim 1; 0011, 0020; each example; tables 1, 2<br>(Family: none) | 1-6<br>6-11 |
| X<br>Y | JP 5-209073 A  (Tokuyama Soda Co., Ltd.),<br>20 August 1993 (20.08.1993),<br>claim 1; 0010; each example; table 1<br>(Family: none) | 1-6<br>6-11 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>12 May, 2014 (12.05.14) | Date of mailing of the international search report<br>20 May, 2014 (20.05.14) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2014/057754 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2011-219555 A  (Unitika Ltd.),<br>04 November 2011 (04.11.2011),<br>claim 1; 0023; each example; table 1<br>(Family: none) | 1-6<br>6-11 |
| X<br>Y | JP 8-27296 A  (Mitsui Toatsu Chemicals, Inc.),<br>30 January 1996 (30.01.1996),<br>claim 1; each example; table 4<br>(Family: none) | 1-5<br>6-11 |
| Y | WO 2012/023465 A1  (Toray Industries, Inc.),<br>23 February 2012 (23.02.2012),<br>0024, 0030 to 0048<br>& US 2013/0137788 A1    & EP 2607415 A1<br>& CN 103097441 A          & TW 201219463 A | 7 |
| Y | JP 2004-168895 A  (Unitika Ltd.),<br>17 June 2004 (17.06.2004),<br>claim 1; 0007, 0016, 0032<br>(Family: none) | 8-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007112867 A
- WO 2012023465 A